# FASCICULE DE BREVET EUROPEEN

(11) **EP 2 121 434 B1**
(45) Date de publication et mention de la délivrance du brevet: **13.10.2010**
(21) Numéro de dépôt: 08761892.2
(22) Date de dépôt: 07.01.2008
(51) Int. Cl.: B64C 1/26, B64C 3/56

(54) **VOILURE D'AERONEF EN PLUSIEURS ELEMENTS DEMONTABLES**
FLUGZEUGFLÜGEL MIT MEHREREN ABNEHMBAREN ELEMENTEN
AIRCRAFT WING INCLUDING A PLURALITY OF DISMOUNTABLE MEMBERS

(30) Priorité: 16.01.2007 FR 0700292
(43) Date de publication de la demande: 25.11.2009
(73) Titulaire: Sagem Défense Sécurité, 75015 Paris (FR)
(72) Inventeur: PAJARD, Jean-Pierre, F-75015 Paris (FR)
(74) Mandataire: Cabinet Plasseraud
(86) Numéro de dépôt international: PCT/FR2008/050014
(87) Numéro de publication internationale: WO 2008/099097

(56) Documents cités:
- BE-A- 369 829
- DE-A1- 2 005 372
- US-A- 3 093 075
- US-A1- 2006 091 258
- US-B1- 6 224 451
- THOMPSON B E ET AL: "SAILPLANE CARRY-THROUGH STRUCTURES MADE WITH COMPOSITE MATERIALS" JOURNAL OF AIRCRAFT, AIAA, RESTON, VA, US, vol. 33, no. 3, 1 mai 1996 (1996-05-01), pages 596-600, XP000589209 ISSN: 0021-8669

## Description

La présente invention concerne d'une façon générale le domaine des aéronefs équipés de voilures, et elle concerne plus spécifiquement des perfectionnements apportés aux voilures d'aéronef ayant une étendue longitudinale et constituées d'au moins deux éléments de voilure disposés bout à bout, un premier élément de voilure étant solidarisé, de façon démontable, à un second élément de voilure adjacent à l'aide d'au moins un moyen d'accouplement.

Les voilures, et en particulier les voilures de portance des aéronefs sont des éléments de grandes, voire très grandes dimensions qui accroissent considérablement l'encombrement général des aéronefs transversalement à leur fuselage. Pour certains types d'aéronefs, cet encombrement procuré par les voilures est rédhibitoire dans certaines circonstances, en particulier pour le transport et/ou le rangement des aéronefs.

Pour ce qui est du transport, certains aéronefs tels que les planeurs doivent être transportés dans des véhicules routiers (camions ou remorques) par exemple pour être ramenés à leur base après un atterrissage éloigné. Pour ce transport, les voilures (qui, pour les planeurs, sont de grande longueur) doivent pouvoir être démontées et rangées le long du fuselage. D'autres types d'aéronefs tels que les drones doivent être transportés enfermés dans des containers dimensionnés pour être embarqués sur des camions, ce qui implique que leurs voilures soient démontables, en tout ou partie) pour être transportées séparément.

Pour ce qui est du rangement, et notamment d'un rangement de longue durée, l'encombrement transversal conféré par les voilures pose un problème important, qu'il, s'agisse d'un rangement sous hangar (la possibilité de démonter les voilures au moins en partie permet de réduire la dimension des hangars ou de loger un plus grand nombre d'aéronefs dans un hangar de surfaces donnée) ou d'un rangement en container (le démontage de tout ou partie des voilures est impératif).

On connaît certes la solution des ailes repliables adoptées pour certains avions, notamment ceux embarqués sur porte-avions, qui permet un gain de place notable ; toutefois, la solution de l'aile repliable en totalité ou en partie permet certes de réduire l'encombrement transversal, mais, du fait que l'aile est repliée vers le haut, il en résulte, un accroissement de l'encombrement vertical de l'avion. De ce fait, la solution de la voilure repliable ne peut pas donner satisfaction lorsqu'il s'agit par exemple du transport par route ou du rangement en container de l'aéronef.

Actuellement, les voilures ou portions de voilure qui sont démontables sont assemblées de façon classique par boulonnage ou par goupilles. Une telle voilure est connue de DE-2005372, qui représente l'art antérieur le plus proche. Il en résulte que les opérations d'assemblage et de démontage sont longues. Il s'agit là d'une contrainte qui est jugée inacceptable dans certaines applications, par exemple pour les drones dont la rapidité de mise en oeuvre est un facteur déterminant d'efficacité. Dans d'autres applications (par exemple pour les planeurs), un montage et un démontage rapides de tout ou partie de la voilure, bien que non indispensables, seraient cependant grandement appréciés. De plus, les organes d'assemblage doivent être mécaniquement capables de supporter les couples élevés subis par les éléments de voilure et ils doivent être dimensionnés en conséquence ; ils sont donc encombrants et lourds. Enfin, la multiplication des organes d'assemblage rendue nécessaire pour l'obtention de la résistance mécanique requise rend l'assemblage hyperstatique et il en résulte des contraintes mécaniques préjudiciables à la fiabilité.

L'invention a essentiellement pour but de répondre aux attentes de la pratique et de proposer une solution technique originale et relativement peu onéreuse à mettre en oeuvre qui autorise un montage et un démontage simples et rapides de tout ou partie de la voilure d'un aéronef, tout en conservant les caractéristiques de résistance mécanique et de tenue aux couples de la voilure en cours de vol de l'aéronef.

A ces fins, l'invention propose, dans une voilure d'aéronef ayant une étendue longitudinale et constituée d'au moins deux éléments de voilure disposés bout à bout, un premier élément de voilure étant solidarisé, de façon démontable, à un second élément de voilure adjacent à l'aide d'au moins un moyen d'accouplement, que le moyen d'accouplement comprenne :
- une pièce d'accouplement mâle portée par le premier élément de voilure sensiblement parallèlement à l'étendue longitudinale de la voilure, cette pièce d'accouplement mâle ayant une extrémité de montage sur ledit élément de voilure et une extrémité libre et présentant une face supérieure et une face inférieure écartées l'une de l'autre et tournées vers l'extérieur à l'opposé l'une de l'autre,
   - une première desdites faces étant sensiblement plane,
   - la seconde desdites faces comportant un relief d'étendue longitudinale à section approximativement en V, et
   - lesdites première et seconde faces étant mutuellement inclinées de manière à se rapprocher de la seconde face en direction de son extrémité libre,
- une pièce d'accouplement femelle portée par le second élément de voilure sensiblement parallèlement à l'étendue longitudinale de la voilure, cette pièce d'accouplement femelle ayant une extrémité de montage sur ledit second élément de voilure et une extrémité libre et présentant une face supérieure et une face inférieure écartées l'une de l'autre et disposées en vis-à-vis,
   - une premières desdites faces étant sensiblement plane,
   - la seconde desdites faces comportant un relief d'étendue longitudinale à section approximativement en V de forme complémentaire de celle de la section en V du relief de la seconde face de la pièce d'accouplement mâle et
   - lesdites première et seconde faces étant inclinées de manière à s'écarter de la seconde face en direction de son extrémité libre, cette inclinaison étant complémentaire de celle de la première face inclinée de la pièce d'accouplement mâle, et
- des moyens de retenue propres à retenir les deux pièces d'accouplement en position accouplée avec leurs faces coopérantes respectives maintenues fermement en appui mutuel.

Grâce à cet agencement, le moyen d'accouplement, en position accouplée des deux pièces d'accouplement, est en mesure de reprendre tous les couples qui peuvent s'exercer selon les trois axes de référencement (couple autour de l'axe longitudinal de la voilure, couple autour de l'axe transversal de la voilure, couple autour de l'axe perpendiculaire à la voilure) et les deux éléments de voilure sont bloqués l'un par rapport à l'autre contre toute rotation relative. Cet avantage est particulièrement important pour les aéronefs dans lesquels la voilure subit des contraintes élevées non seulement dans le sens vertical en cours de vol (portance), mais aussi dans le sens longitudinal au départ (lancement par fusée ou catapultage par exemple) et au retour (barrière d'arrêt par exemple).

L'agencement qui vient d'être exposé peut donner lieu à diverses réalisations pratiques. Ainsi, les susdites premières faces respectives des pièces d'accouplement peuvent être inclinées par rapport à l'étendue longitudinale de la voilure, tandis que les susdites secondes faces respectives d'accouplement sont sensiblement parallèles à l'étendue longitudinale de la voilure ; ou bien les susdites secondes faces respectives des pièces d'accouplement peuvent être inclinées par rapport à l'étendue longitudinale de la voilure, tandis que les susdites premières faces respectives d'accouplement sont sensiblement parallèles à l'étendue longitudinale de la voilure ; ou bien encore les susdites premières faces respectives et secondes faces respectives des pièces d'accouplement peuvent toutes être inclinées par rapport à l'étendue longitudinale de la voilure.

Dans un mode de réalisation pratique qui est préféré en particulier pour les voilures portantes des aéronefs, on prévoit que les premières faces sensiblement planes et inclinées des pièces d'accouplement respectivement mâle et femelle soient leurs faces supérieures respectives et que les faces munies de reliefs complémentaires des pièces d'accouplement respectivement mâle et femelle soient leurs faces inférieures respectives.

Pour faciliter l'assemblage des deux pièces d'accouplement et éviter leur endommagement pouvant résulter d'un mauvais alignement préalable, il est avantageux de prévoir que la première face sensiblement plane et inclinée de la pièce d'accouplement femelle soit évidée centralement et présente deux patins d'appui situés longitudinalement de part et d'autre de l'évidement central.

Pour ce qui est de la réalisation pratique des reliefs prévus sur les secondes faces respectives des deux pièces d'accouplement mâle et femelle, plusieurs solutions sont envisageables. Dans un exemple concret, le relief d'étendue longitudinale à section approximativement en V prévu sur la seconde desdites faces de la pièce d'accouplement mâle est une gorge et le relief d'étendue longitudinale à section approximativement en V de forme complémentaire prévu sur la seconde desdites faces de la pièce d'accouplement femelle est une saillie.

Pour constituer les susdits moyens de retenue des deux pièces d'accouplement en position accouplée, il est intéressant que lesdites pièces d'accouplement soient percées de trous transversaux à leurs susdites premières et secondes faces respectives et mutuellement alignés, en position accouplée des deux pièces d'accouplement, pour définir au moins un passage traversant, et en ce qu'au moins un organe fileté d'assemblage est engagé à travers ledit au moins un passage pour retenir les deux pièces d'accouplement en position accouplée.

Pour obtenir un assemblage fiable et sécuritaire des deux pièces d'accouplement, il est préférable que les trous transversaux prévus dans les pièces d'accouplement mâle et femelle définissent, en position accouplée des deux pièces d'accouplement, deux passages traversants distants longitudinalement l'un de l'autre et que deux organes filetés d'assemblage soient engagés à travers ces deux passages respectifs.

Il est remarquable que l'organe fileté d'assemblage ne reprend aucun couple et que sa seule fonction est de maintenir les deux pièces d'accouplement dans leur position longitudinale correcte dans laquelle on est assuré que les diverses surfaces portantes sont en appui respectivement les unes sur les autres. L'organe fileté peut ainsi être petitement dimensionné, avec comme conséquence un gain de place et un gain de poids.

L'invention sera mieux comprise à la lecture de la description détaillée qui suit d'un mode de réalisation préféré donné uniquement à titre d'exemple nullement limitatif. Dans cette description, on se réfère aux dessins annexés sur lesquels :
- la figure 1 représente de façon très schématique, en perspective, une partie d'une voilure d'aéronef agencée conformément à l'invention ;
- la figure 2 est une vue éclatée d'un moyen d'accouplement rapide démontable mis en oeuvre dans la voilure de la figure 1 ; et
- la figure 3 est une vue du moyen d'accouplement rapide démontable de la figure 2 illustré en position de montage.

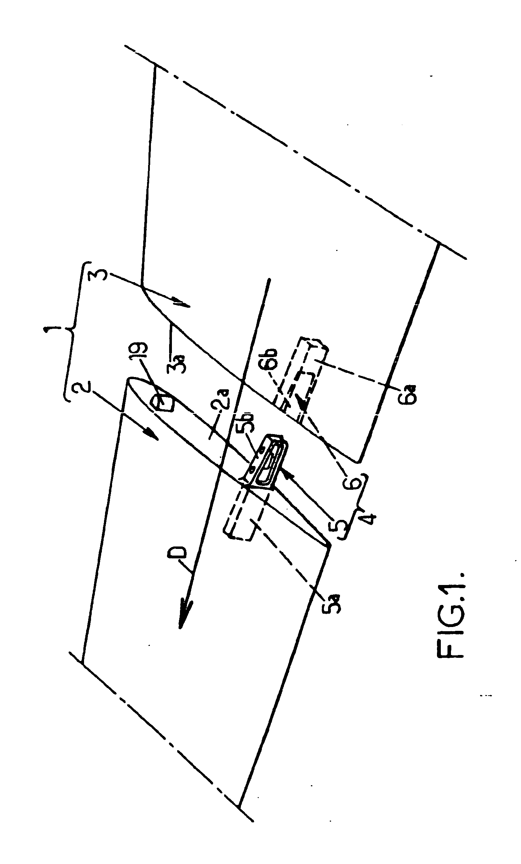

La figure 1 à laquelle on se réfère tout d'abord montre une partie d'une voilure 1 d'un aéronef, laquelle voilure est supposée être, dans l'exemple illustré, une voilure de portance. Cette voilure est constituée en deux parties (ou au moins deux parties), à savoir un premier élément 2 de voilure qui est amovible vis-à-vis d'un second élément 3 de voilure qui lui est adjacent et qui, en pratique, peut être fixe : il peut par exemple être solidaire d'un fuselage de l'aéronef comme montré à la figure 1, ou bien il peut tout simplement s'agir d'une portion du fuselage lui-même ou éventuellement d'une zone du fuselage en saillie latérale et formant amorce de voilure.

Conformément aux buts fixés, la partie 3 de voilure amovible doit être démontable et montable de façon rapide et sans matériels particuliers, notamment sur le terrain lorsqu'il s'agit d'un aéronef qui doit être transporté par exemple par route avant et/ou après son vol. A ces fins, il est prévu conformément à l'invention au moins un moyen 4 d'accouplement rapide constitué de deux pièces d'accouplement respectivement mâle et femelle propres à coopérer mutuellement en position d'accouplement. Ces pièces d'accouplement, notamment métallique et par exemple en acier, équipent les faces transversales respectives des deux éléments de voilure, par exemple la pièce d'accouplement mâle 5 étant supportée par la face transversale 2a' du premier élément 2 de voilure et la pièce d'accouplement femelle 6 étant supportée par la face transversale 3a du premier élément 3 de voilure. Les faces transversales 2a, 3a précitées sont en pratique sensiblement perpendiculaires à une direction D définissant l'étendue longitudinale de la voilure, de sorte que les deux pièces d'accouplement 5 mâle et 6 femelle s'étendent, à partir desdites faces transversales 2a, 3a respectives, sensiblement parallèlement à ladite étendue longitudinale de la voilure.

Pour assurer d'une façon efficace une liaison mécaniquement résistante et sans jeu entre les deux éléments de voilure avec une reprise des couples s'exerçant sur les éléments de voilure, les pièces d'accouplement doivent être solidarisées à des organes structuraux majeurs des éléments de voilure, notamment aux extrémités affrontées de longerons respectifs des éléments de voilure. Les deux pièces d'accouplement 5, 6 s'étendent sensiblement parallèlement à l'étendue longitudinale de la voilure 1 et sensiblement perpendiculairement aux faces transversales 2a, 3a respectivement des deux éléments de voilure 2, 3. Pour assurer sa protection mécanique, la pièce d'accouplement femelle 6 est sensiblement en totalité encastrée dans l'élément 3 de voilure correspondant.

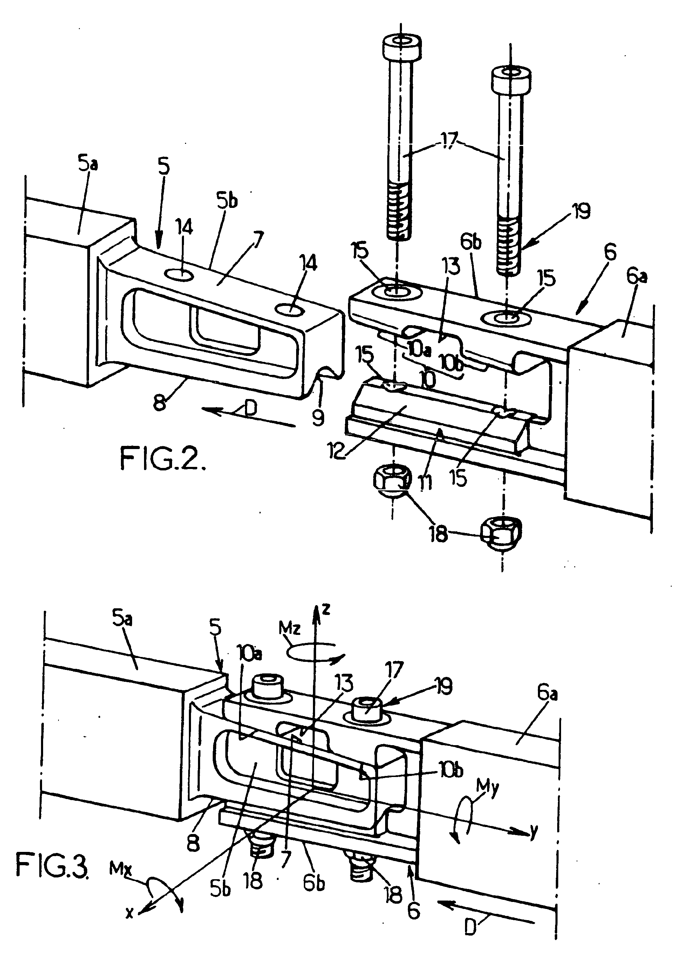

Comme représenté à la figure 1, mais comme on le voit mieux sur les figures 2 et 3, chaque pièce d'accouplement 5, 6 comporte une extrémité de montage ou embase respectivement 5a, 6a propre à être reçue dans un fourreau de l'élément 2, 3 de voilure respectif et à y être rigidement fixée, éventuellement par l'intermédiaire de moyens de réglage en position.

Comme visible à la figure 2, la pièce d'accouplement 5 mâle portée par le premier élément 2 de voilure possède une extrémité 5b libre qui s'étend sensiblement perpendiculairement à l'extrémité 2a de montage précitée et qui présente une face 7 supérieure et une face 8 inférieure. Les faces 7, 8 sont écartées l'une de l'autre selon une direction sensiblement transversale au premier élément 2 de voilure et sont tournées à l'opposé l'une de l'autre.

Une première desdites faces, la face 7 supérieure dans l'exemple considéré, est sensiblement plane.

La seconde desdites faces, la face 8 inférieure dans l'exemple considéré, comporte un relief d'étendue longitudinale à section approximativement en V. Dans l'exemple considéré, le relief est une gorge 9 à section transversale sensiblement en V.

Les première et seconde faces 7, 8 sont mutuellement inclinées de manière à se rapprocher de la seconde face en direction de leur extrémité libre, de sorte que les deux faces présentent une conformation générale en coin.

Comme visible toujours à la figure 2, la pièce d'accouplement 6 femelle portée par le second élément 3 de voilure possède une extrémité 6b libre qui présente une face 10 supérieure et une face 11 inférieure qui sont écartées l'une de l'autre et tournées l'une vers l'autre et disposées en vis-à-vis.

Une première desdites faces, la face 10 supérieure dans l'exemple considéré, est sensiblement plane.

La seconde desdites faces, la face 11 inférieure dans l'exemple considéré, comporte un relief d'étendue longitudinale, à section approximativement en V de forme complémentaire de celle de la section en V du relief de la seconde face (face 8 inférieure dans l'exemple considéré) de la pièce d'accouplement 5 mâle. Autrement dit, dans l'exemple de réalisation considéré, le relief de la face 11 inférieure est une saillie ou nervure 12 à section transversale en V complémentaire de la section en V de la gorge 8.

Les première et seconde faces 10, 11 sont mutuellement inclinées de manière à s'écarter l'une de l'autre en direction de leur extrémité libre, cette inclinaison mutuelle étant complémentaire de celle des faces mutuellement inclinées 7, 8 précitées de la pièce d'accouplement 5 mâle.

Diverses solutions peuvent en pratique être retenues. Il est possible de prévoir, comme retenu dans l'exemple concret illustré aux figures 1 à 3, que ce soit les susdites premières faces 7, 10 respectives des pièces d'accouplement 5, 6 qui sont inclinées par rapport à l'étendue longitudinale de la voilure, tandis que les susdites secondes faces 8, 11 respectives d'accouplement 5, 6 sont sensiblement parallèles à l'étendue longitudinale de la voilure.

Mais il est également envisageable, si besoin en est, que ce soit les susdites secondes faces 8, 11 respectives des pièces d'accouplement 5, 6 qui soient inclinées par rapport à l'étendue longitudinale de la voilure, tandis que les susdites premières faces 7, 10 respectives d'accouplement 5, 6 sont sensiblement parallèles à l'étendue longitudinale de la voilure. Ou bien encore, en tant que de besoin, on peut prévoir que les susdites premières faces 7, 10 respectives et secondes faces 8, 11 respectives des pièces d'accouplement 5, 6 soient, toutes, inclinées par rapport à l'étendue longitudinale de la voilure.

On notera aussi que d'autres agencements peuvent être mis en oeuvre qui sont aptes à procurer les résultats recherchés. Notamment, les conformations respectives des faces supérieures et inférieures précitées peuvent être inversées, les faces inférieures 8, 11 étant inclinées et les faces 7, 10 supérieures étant munies de reliefs complémentaires. De même, les conformations des faces, les faces 8, 11 dans l'exemple illustré, à reliefs complémentaires peuvent être inversées, la face 8 inférieure de la pièce d'accouplement 5 mâle étant munie de la saillie ou nervure à section en V et la face 11 inférieure de la pièce d'accouplement 6 femelle étant munie de la gorge à section en V. De plus, le montage des pièces d'accouplement mâle et femelle peut être inversé, la pièce d'accouplement 5 mâle étant montée sur l'élément 3 de voilure fixe et la pièce d'accouplement 6 femelle étant montée sur l'élément 2 de voilure amovible.

Dans la position d'accouplement illustrée à la figure 3, l'inclinaison des faces supérieures 7, 10 assure le positionnement longitudinal correct des deux pièces d'accouplement 5, 6 l'une par rapport à l'autre, et donc, du fait de la précision de montage des deux pièces d'accouplement 5, 6 sur les éléments 2, 3 de voilure respectifs, le positionnement correct de l'élément 2 de voilure amovible par rapport à l'élément 3 de voilure fixe.

Par ailleurs, les faces 7, 10 coopérantes et les faces mutuellement coopérantes en V de la gorge 9 et de la saillie 12 définissent trois appuis plans qui reprennent les trois couples, représentés par les flèches Mx, My, Mz, susceptibles de s'exercer par apport à un référentiel d'axes orthonormé x, y, z.

Le maintien des deux pièces d'accouplement 5, 6 dans la position d'accouplement visible à la figure 3, avec leurs faces coopérantes 7, 10 ; 8, 11 maintenues fermement en appui mutuel, est assuré à l'aide de moyens de retenue désignés dans leur ensemble par la référence numérique 19. Dans un mode de réalisation simple avec un faible poids et un faible encombrement des moyens de retenue mis en oeuvre, cette.fonction peut être assurée par boulonnage. Bien qu'un seul boulon puisse suffire pour assurer l'assemblage, il est cependant plus facile et d'un niveau de sécurité accru de prévoir plusieurs boulons, de préférence deux boulons distants l'un de l'autre, qui peuvent alors être de moindre diamètre et plus facilement implantables à travers les pièces d'accouplement 5, 6.

A cet effet, les pièces d'accouplement 5, 6 sont percées de trous transversaux à leurs susdites premières et secondes faces 7, 8 ; 10, 11 respectives. Sur la figure 2, on a désigné par 14 les trous transversaux aux faces 7, 8 de la pièce d'accouplement 5 mâle et par 15 les trous transversaux aux faces 10, 11 de la pièce d'accouplement 6 femelle.

En position de montage, chaque trou 14 de la pièce d'accouplement 5 mâle est aligné avec deux trous 15 encadrants de la pièce d'accouplement 6 femelle et ils définissent ensemble un passage traversant propre à recevoir un organe fileté 17 d'assemblage tel qu'un boulon recevant un écrou 18. Les figures 2 et 3 illustrent une configuration avec deux boulons 17.

Pour améliorer la qualité du serrage mutuel des deux pièces d'accouplement 5 mâle et 6 femelle, il est avantageux de réduire les surfaces de contact au droit du ou des organes filetés 17 d'assemblage. A cette fin, on peut prévoir, dans la configuration à deux organes d'assemblage 17 illustrée à titre d'exemple, que la face 10 de la pièce d'accouplement 6 femelle soit évidée centralement en 13 ; ladite face 10 se présente alors sous forme de deux patins 10a, 10b d'appui de surface réduite situés longitudinalement de part et d'autre de l'évidement 13 central. Un agencement analogue pourrait être prévu pour la face 11 en vis-à-vis ; toutefois, dans l'exemple représenté, la face 11 de la pièce d'accouplement femelle 6 a été maintenue avec une structure continue afin d'éviter des accrochages et des chocs lors de l'assemblage des deux pièces d'accouplement 5, 6.

Un seul moyen 4 d'accouplement peut suffire pour assurer l'assemblage mécanique fiable des deux éléments 2, 3 de voilure. Toutefois, un élément de voilure (ou les deux) peut présenter une flexibilité pouvant conduire à des déformations relatives des deux faces d'assemblage affrontées des éléments de voilure dans sa partie éloignée du moyen 4 d'accouplement. Il est alors utile de prévoir un maintien complémentaire des deux éléments de voilure à distance du moyen 4 d'accouplement, par exemple sous forme d'un système de simple appui plan comme schématisé en 19 à la figure 1, ou bien en prévoyant un autre moyen 4 d'accouplement identique et implanté à distance ; dans ce cas, les liaisons deviennent hyperstatiques et des moyens de réglage doivent être prévus sur l'un au moins des moyens d'accouplement pour permettre un ajustement de positionnement de sa pièce mâle et/ou de sa pièce femelle sur l'élément de voilure respectif.

## Revendications

1. voilure (1) d'aéronef ayant une étendue longitudinale et constituée d'au moins deux éléments (2, 3) de voilure disposés bout à bout, un premier élément (2) de voilure étant solidarisé, de façon démontable, à un second élément (3) de voilure adjacent à l'aide d'au moins un moyen (4) d'accouplement,
**caractérisée en ce que** le moyen (4) d'accouplement comprend :
- une pièce d'accouplement (5) mâle portée par le premier élément (2) de voilure sensiblement parallèlement à l'étendue longitudinale de la voilure (1), cette pièce d'accouplement (5) mâle ayant une extrémité (5a) de montage sur ledit élément (2) de voilure et une extrémité (5b) libre et présentant une face (7) supérieure et une face (8) inférieure écartées l'une de l'autre et tournées vers l'extérieur à l'opposé l'une de l'autre,
. une première desdites faces étant sensiblement plane,
. la seconde desdites faces comportant un relief (9) d'étendue longitudinale à section approximativement en V, et
. lesdites première et seconde faces étant mutuellement inclinées de manière à se rapprocher l'une de l'autre en direction de leur extrémité libre,
- une pièce d'accouplement (6) femelle portée par le second élément (3) de voilure sensiblement parallèlement à l'étendue longitudinale de la voilure, cette pièce d'accouplement (6) femelle ayant une extrémité (6a) de montage sur ledit second élément (3) de voilure et une extrémité (6b) libre et présentant une face (10) supérieure et une face (11) inférieure écartées l'une de l'autre et disposées en vis-à-vis,
. une première desdites faces étant sensiblement plane,
. la seconde desdites faces comportant un relief (12) d'étendue longitudinale à section approximativement en V de forme complémentaire de celle de la section en V du relief (9) de la seconde face de la pièce d'accouplement mâle, et
. lesdites première et seconde faces étant mutuellement inclinées de manière à s'écarter l'une de l'autre en direction de leur extrémité libre, cette inclinaison mutuelle étant complémentaire de celle des faces mutuellement inclinées de la pièce d'accouplement (5) mâle, et
- des moyens (19) de retenue propres à retenir les deux pièces d'accouplement (5, 6) en position accouplée avec leurs faces coopérantes (7, 10 ; 8, 11) respectives maintenues fermement en appui mutuel,
ce grâce à quoi en position accouplée les deux pièces d'accouplement sont bloquées l'une par rapport à l'autre contre toute rotation relative.

2. Voilure d'aéronef selon la revendication 1, **caractérisée en ce que** les susdites premières faces respectives des pièces d'accouplement (5, 6) sont inclinées par rapport à l'étendue longitudinale de la voilure, tandis que les susdites secondes faces respectives d'accouplement (5, 6) sont sensiblement parallèles à l'étendue longitudinale de la voilure.

3. Voilure d'aéronef selon la revendication 1, **caractérisée en ce que** les susdites secondes faces respectives des pièces d'accouplement (5, 6) sont inclinées par rapport à l'étendue longitudinale de la voilure, tandis que les susdites premières faces respectives d'accouplement (5, 6) sont sensiblement parallèles à l'étendue longitudinale de la voilure.

4. Voilure d'aéronef selon la revendication 1, **caractérisée en ce que** les susdites premières faces respectives et secondes faces respectives des pièces d'accouplement (5, 6) sont inclinées par rapport à l'étendue longitudinale de la voilure.

5. Voilure d'aéronef selon la revendication 2, **caractérisée en ce que** les premières faces sensiblement planes et inclinées des pièces d'accouplement (5, 6) respectivement mâle et femelle sont leurs faces (7, 10) supérieures respectives et **en ce que** les faces munies de reliefs complémentaires des pièces d'accouplement (5, 6) respectivement mâle et femelle sont leurs faces (8, 11) inférieures respectives.

6. Voilure d'aéronef selon la revendication 2 ou 5, **caractérisée en ce que** la première face (10) sensiblement plane de la pièce (6) d'accouplement femelle est évidée (13) centralement et présente deux patins d'appui (10a, 10b) situés longitudinalement de part et d'autre de l'évidement (13) central.

7. Voilure d'aéronef selon l'une quelconque des revendications 1 à 6, **caractérisée en ce que** le relief d'étendue longitudinale à section approximativement en V prévu sur la seconde desdites faces de la pièce d'accouplement mâle est une gorge (9) et **en ce que** le relief d'étendue longitudinale à section approximativement en V de forme complémentaire prévu sur la seconde desdites faces de la pièce d'accouplement femelle est une saillie (12).

8. Voilure d'aéronef selon l'une quelconque des revendications 1 à 7, **caractérisée en ce que**, pour constituer les susdits moyens (19) de retenue des deux pièces d'accouplement (5, 6) en position accouplée, lesdites pièces d'accouplement (5, 6) sont percées de trous (14, 15) transversaux à leurs susdites premières et secondes faces respectives et mutuellement alignés, en position accouplée des deux pièces d'accouplement (5, 6), pour définir au moins un passage traversant, et **en ce qu'**au moins un organe fileté (17, 18) d'assemblage est engagé à travers ledit au moins un passage pour retenir les deux pièces d'accouplement (5, 6) en position accouplée.

9. Voilure d'aéronef selon la revendication 8, **caractérisée en ce que** les trous (14, 15) transversaux prévus dans les pièces d'accouplement mâle et femelle définissent, en position accouplée des deux pièces d'accouplement, deux passages traversants distants longitudinalement l'un de l'autre et **en ce que** deux organes (17, 18) filetés d'assemblage sont engagés à travers ces deux passages respectifs.

## Claims

1. An aircraft wing (1) having a longitudinal span and consisting of at least two wing elements (2, 3) positioned end to end, a first wing element (2) being secured, dismantleably, to an adjacent second wing element (3) using at least one coupling means (4), **characterized in that** the coupling means (4) comprises:
- a male coupling piece (5) borne by the first wing element (2) substantially parallel to the longitudinal span of the wing (1), this male coupling piece (5) having a mounting end (5a) for mounting on said wing element (2) and a free end (5b) and exhibiting an upper face (7) and a lower face (8) which are separated from one another and face outward away from one another,
• a first of said faces being substantially planar,
• the second of said faces comprising a relief (9) running longitudinally with a substantially V-shaped cross section, and
• said first and second faces being inclined with respect to one another so that they converge toward one another toward their free end,
- a female coupling piece (6) borne by the second wing element (3) substantially parallel to the longitudinal span of the wing, this female coupling piece (6) having a mounting end (6a) for mounting on said second wing element (3) and a free end (6b) and exhibiting an upper face (10) and a lower face (11) which are separated from one another and positioned facing one another,
• a first of said faces being substantially planar,
• the second of said faces comprising a relief (12) running longitudinally with a substantially V-shaped cross section, of a shape that complements that of the V-shaped cross section of the relief (9) of the second face of the male coupling piece, and
• said first and second faces being inclined with respect to one another so that they diverge from one another toward their free end, this inclination with respect to one another being the complement of that of the mutually-inclined faces of the male coupling piece (5), and
- retaining means (19) capable of holding the two coupling pieces (5, 6) in the coupled position with their respective cooperating faces (7, 10; 8, 11) kept firmly pressed together,
by virtue of which, when the two coupling pieces are in the coupled position they are immobilized relative to one another against any relative rotation.

2. The aircraft wing as claimed in claim 1, **characterized in that** the aforementioned respective first faces of the coupling pieces (5, 6) are inclined with respect to the longitudinal span of the wing, whereas the aforementioned respective second coupling faces (5, 6) are substantially parallel to the longitudinal span of the wing.

3. The aircraft wing as claimed in claim 1, **characterized in that** the aforementioned respective second faces of the coupling pieces (5, 6) are inclined with respect to the longitudinal span of the wing, whereas the aforementioned respective first coupling faces (5, 6) are substantially parallel to the longitudinal span of the wing.

4. The aircraft wing as claimed in claim 1, **characterized in that** the aforementioned respective first faces and respective second faces of the coupling pieces (5, 6) are inclined with respect to the longitudinal span of the wing.

5. The aircraft wing as claimed in claim 2, **characterized in that** the substantially planar and inclined first faces of the male and female coupling pieces (5, 6) respectively are their respective upper faces (7, 10), and **in that** the faces of the respective male and female coupling pieces (5, 6) that are equipped with complementary reliefs are their respective lower faces (8, 11).

6. The aircraft wing as claimed in claim 2 or 5, **characterized in that** the substantially planar first face (10) of the female coupling piece (6) is centrally hollowed (13) and exhibits two bearing pads (10a, 10b) situated longitudinally on each side of the central hollow (13).

7. The aircraft wing as claimed in any one of claims 1 to 6, **characterized in that** the longitudinally running relief of substantially V-shaped cross section provided on the second of said faces of the male coupling piece is a groove (9) and **in that** the longitudinally running relief of substantially V-shaped cross section of complementary shape provided on the second of said faces of the female coupling piece is a projection (12).

8. The aircraft wing as claimed in any one of claims 1 to 7, **characterized in that**, in order to form the aforementioned retaining means (19) that hold the two coupling pieces (5, 6) in the coupled position said coupling pieces (5, 6) are pierced with holes (14, 15) that are transverse to their aforementioned respective first and second faces and mutually aligned when the two coupling pieces (5, 6) are in the coupled position in order to define at least one through-passage, and **in that** at least one threaded fastener (17, 18) is engaged through said at least one passage in order to hold the two coupling pieces (5, 6) in the coupled position.

9. The aircraft wing as claimed in claim 8, **characterized in that** the transverse holes (14, 15) provided in the male and female coupling pieces define, when the two coupling pieces are in the coupled position, two through-passages longitudinally distant from one another, and **in that** two threaded fasteners (17, 18) are engaged through these two respective passages.

## Patentansprüche

1. Luftfahrzeug-Tragwerk (1), welches eine longitudinale Ausdehnung aufweist und aus wenigstens zwei Tragwerk-Elementen (2, 3) zusammengesetzt ist, die Ende an Ende angeordnet sind, wobei ein erstes Tragwerk-Element (2) in lösbarer Weise mit einem zweiten, benachbarten Tragwerk-Element (3) mittels wenigstens eines Kopplungsmittels (4) verbunden ist,
**dadurch gekennzeichnet, dass** das Kopplungsmittel (4) umfasst:
- ein männliches Kopplungsstück (5), das von dem ersten Tragwerk-Element (2) im wesentlichen parallel zur longitudinalen Ausdehnung des Tragwerks (1) gehalten wird, wobei das männliche Kopplungsstück (5) ein Ende (5a) zur Montage an dem Tragwerk-Element (2) und ein freies Ende (5b) aufweist, und eine obere Fläche (7) und eine untere Fläche (8) aufweist, die voneinander beabstandet sind und einander entgegengesetzt nach außen gekehrt sind,
- wobei eine erste der Flächen im Wesentlichen eben ist,
- die zweite der Flächen ein Relief (9) mit longitudinaler Ausdehnung und etwa V-förmigem Querschnitt umfasst, und
- die erste und die zweite Fläche so gegeneinander geneigt sind, dass sie sich einander in der Richtung ihres freien Endes annähern,
- ein weibliches Kopplungsstück (6), das von dem zweiten Tragwerk-Element (3) im Wesentlichen parallel zur longitudinalen Ausdehnung des Tragwerks gehalten wird, wobei das weibliches Kopplungsstück (6) ein Ende (6a) zur Montage an dem zweiten Tragwerk-Element (3) und ein freies Ende (6b) aufweist und eine obere Fläche (10) und eine untere Fläche (11) aufweist, die voneinander beabstandet sind und einander zugewandt angeordnet sind,
- wobei eine erste der Flächen (10) im Wesentlichen eben ist,
- die zweite der Flächen (11) ein Relief (12) mit longitudinaler Ausdehnung und einem im Wesentlichen V-förmigen Querschnitt umfasst, in einer Form komplementär zu derjenigen des V-förmigen Querschnitts des Reliefs (9) der zweiten Fläche (11) des männlichen Kopplungsstücks, und
- die erste und zweite Fläche gegeneinander so geneigt sind, dass sie sich in der Richtung ihres freien Endes voneinander entfernen, wobei diese Neigung gegeneinander komplementär zu derjenigen der gegeneinander geneigten Flächen des männlichen Kopplungsstücks (5) ist, und
- Mittel (19) zum Halten, die geeignet sind, die zwei Kopplungsstücke (5, 6) in einer gekoppelten Position zu halten, wobei ihre jeweiligen zusammenwirkenden Flächen (7, 10; 8, 11) fest in gegenseitiger Anlage gehalten werden,
wodurch in der gekoppelten Position die zwei Kopplungsstücke gegen jede Relativdrehung in Bezug zueinander blockiert sind.

2. Luftfahrzeug-Tragwerk nach Anspruch 1,
**dadurch gekennzeichnet, dass** die jeweiligen ersten Flächen der Kopplungsstücke (5, 6) in Bezug auf die longitudinale Ausdehnung des Tragwerks geneigt sind, während die jeweiligen zweiten Kopplungs-Flächen (5, 6) im Wesentlichen parallel zur longitudinalen Ausdehnung des Tragwerks sind.

3. Luftfahrzeug-Tragwerk nach Anspruch 1,
**dadurch gekennzeichnet, dass** die jeweiligen zweiten Flächen der Kopplungsstücke (5, 6) in Bezug auf die longitudinale Ausdehnung des Tragwerks geneigt sind, während die jeweiligen ersten Kopplungs-Flächen (5, 6) im Wesentlichen parallel zur longitudinalen Ausdehnung des Tragwerks sind.

4. Luftfahrzeug-Tragwerk nach Anspruch 1,
**dadurch gekennzeichnet, dass** die jeweiligen ersten Flächen und die jeweiligen zweiten Flächen der Kopplungsstücke (5, 6) in Bezug auf die longitudinale Ausdehnung des Tragwerks geneigt sind.

5. Luftfahrzeug-Tragwerk nach Anspruch 2,
**dadurch gekennzeichnet, dass** die ersten, im Wesentlichen ebenen und geneigten Flächen der jeweiligen männlichen und weiblichen Kopplungsstücke (5, 6) ihre jeweiligen oberen Flächen (7, 10) sind und dass die Flächen der jeweiligen männlichen und weiblichen Kopplungsstücke (5,6), die mit komplementären Reliefs versehen sind, ihre jeweiligen unteren Flächen (8, 11) sind.

6. Luftfahrzeug-Tragwerk nach Anspruch 2 oder 5,
**dadurch gekennzeichnet, dass** die im Wesentlichen ebene erste Fläche (10) des weiblichen Kopplungsstücks (6) in der Mitte vertieft (13) ist und zwei Anlage-Klötze (10a, 10b) aufweist, die longitudinal zu beiden Seiten der zentralen Vertiefung (13) liegen.

7. Luftfahrzeug-Tragwerk nach einem der Ansprüche 1 bis 6,
**dadurch gekennzeichnet, dass** das Relief mit longitudinaler Ausdehnung und im Wesentlichen V-förmigem Querschnitt, das auf der zweiten der Flächen des männlichen Kopplungsstücks vorgesehen ist, eine Vertiefung (9) ist, und dass das Relief mit longitudinaler Ausdehnung und im Wesentlichen V-förmigem Querschnitt in komplementärer Form, das auf der zweiten der Flächen des weiblichen Kopplungsstücks vorgesehen ist, ein Vorsprung (12) ist.

8. Luftfahrzeug-Tragwerk nach einem der Ansprüche 1 bis 7,
**dadurch gekennzeichnet, dass**, um die Mittel (19) zum Halten der zwei Kopplungsstücke (5, 6) in gekoppelter Position zu bilden, die Kopplungsstücke (5, 6) von Löchern (14, 15) durchbohrt sind, die transversal zu ihren jeweiligen ersten und zweiten Flächen sind und gegenseitig ausgerichtet sind, in der gekoppelten Position der zwei Kopplungsstücke (5, 6), um wenigstens einen hindurch verlaufenden Durchgang zu definieren, und dass wenigstens ein Gewindeelement (17, 18) für den Zusammenbau durch den wenigstens einen Durchgang eingeführt ist, um die zwei Kopplungsstücke (5, 6) in gekoppelter Position zu halten.

9. Luftfahrzeug-Tragwerk nach Anspruch 8,
**dadurch gekennzeichnet, dass** die transversalen Löcher (14, 15), die in den männlichen und weiblichen Kopplungsstücken vorgesehen sind, in der gekoppelten Position der zwei Kopplungsstücke zwei longitudinal voneinander entfernte hindurch verlaufende Durchgänge definieren, und dass zwei Gewindeelemente (17, 18) für den Zusammenbau durch die zwei jeweiligen Durchgänge geführt sind.
